# EUROPEAN PATENT APPLICATION

(11) **EP 0 948 210 A2**
(43) Date of publication of application: **06.10.1999**
(21) Application number: 99200585.0
(22) Date of filing: 02.03.1999
(51) Int. Cl.: H04N 7/26

(54) **Method and apparatus for generating digital video signals representing an image**

(30) Priority: 03.04.1998 GB 9807209
(71) Applicant: NDS LIMITED, West Drayton, Middlesex UB7 ODQ (GB)
(72) Inventor: Bock, Alois Martin, Eastleigh, Hampshire SO53 4RH (GB)
(74) Representative: Anderson, Angela Mary

(57) **Abstract**

The present invention relates to generating digital video signals which together represent an image for subsequent reproduction by a display device.

The digital video signals are generated in the form of individual digital data streams representing respective sub-elements of a high definition television image. The sub-elements constitute an array of spatially adjoining segments which together constitute the complete image.

Each of the data streams is compressed before the data streams are multiplexed into a transport stream of data. The compression is effected using a quantisation algorithm and by intra-frame and predictive coding algorithms. The compression is controlled so that the joins between different segments of the image are made less visible upon decoding and reproduction of the image.

## Description

The present invention relates to a method and apparatus for generating digital video signals which together represent an image for subsequent reproduction by a display device.

The complexity of a compression encoder to be used in compressing a digital video signal is roughly related to the rate at which the pixels represented by the signal are to be processed. The development of encoding equipment to compress high definition television (HDTV) signals has required costly and complex encoding equipment due to the high sampling rates used for high definition television. A number of different scanning formats have been proposed for high definition television signals and therefore the complexity of the encoder to be used will also vary according to the choice of format.

Compression algorithms in practical use employ techniques such as quantisation, predictive coding of frames from previous and future frames, and motion compensation.

If an HDTV image were to be split into sub-elements so as to render the task of encoding the image less onerous, there is the likelihood that the compression applied to each sub-element would result in differences in appearance of the sub-elements once the image is decompressed and decoded to recover the image. Such differences would cause joins between the sub-elements to be visible.

It is one aim of the present invention to reduce the visibility of such joins.

According to the present invention there is provided a method of generating encoded digital video signals representing an image, the method comprising the steps of, generating the video signals in the form of individual digital data streams representing respective spatially adjoining sub-elements of the image, compression encoding each of the digital data streams by means of compression algorithms which compress the data to a variable extent, and controlling the extent of compression of the data streams to limit the visibility of joins between the image sub-elements which would appear upon reproduction of the image.

Further according to the present invention there is provided apparatus for generating encoded digital video signals representing an image, the apparatus comprising, a data stream generator for generating the video signals in the form of individual digital data streams representing respective spatially adjoining sub-elements of the image, compression encoding apparatus for compression encoding each of the digital data streams by means of compression algorithms which compress the data to a variable extent, and control apparatus for controlling the extent of compression of the data streams to limit the visibility of joins between the image sub-elements which would appear upon reproduction of the image.

The invention will now be described, by way of example, with reference to the accompanying drawings in which:-
Figure 1 is a block diagram of a prior art digital compression encoder,
Figure 2 is a block diagram of a digital compression encoder according to the present invention,
Figure 3 is a diagram of an image which is split into a spatial array of sub-elements each of which can be encoded by means of the compression encoder of Figure 2, and,
Figure 4 shows a block diagram of a plurality of the compression encoders of Figure 2 linked by a common compression control device.

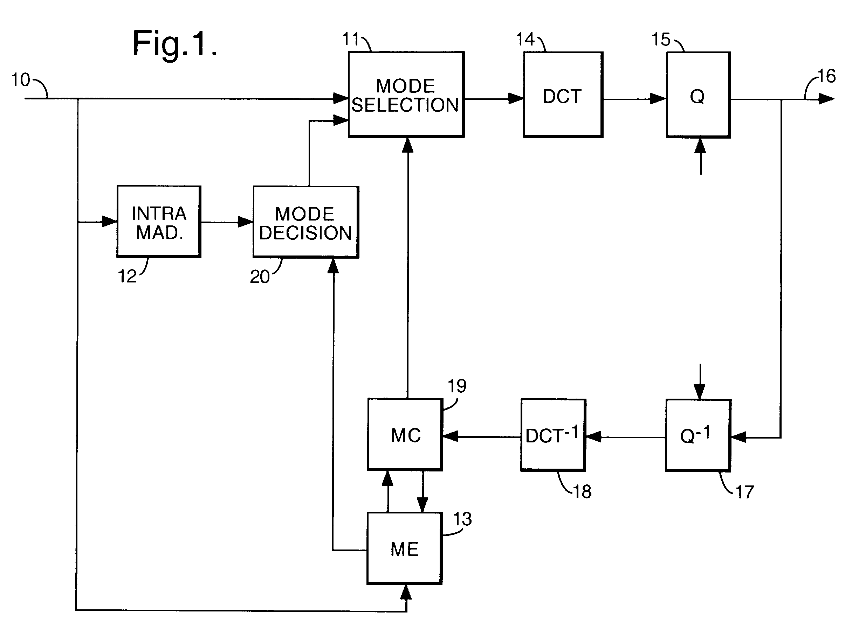

In Figure 1, an input digital video signal is received at an input terminal 10 and applied to a mode selection module 11. The input signal is also applied to an intra mean average difference element 12 and to a motion estimation element 13. The output from the mode selection module 11 is applied to a discrete cosine transform element 14 which supplies a quantisation circuit 15. The output from the quantisation circuit 15 is a compressed form of the input signal and is applied to an output terminal 16. The output signal is fed back through an inverse quantisation circuit 17 and an inverse discrete cosine transform circuit 18 to a motion compensation circuit 19. The motion compensation circuit 19 supplies a motion compensated video signal to the mode selection module 11.

A mode decision circuit 20 is provided with input signals from the intra mean average difference element 12 and from the motion estimation element 13. A mode decision signal is applied by the mode decision circuit to the mode selection module 11.

In operation, the input digital video signal comprises a data stream representing a succession of frames of television pictures. Each frame is divided into sets of data which are known in the art as slices where each slice contains one or more macroblocks of pixels. The mode selection module is switchable to select amongst a number of modes of compression. A first of these compression modes is known as intra frame coding in which data in a frame is compressed using information contained within the frame to produce what is known as an I frame. A second of the compression modes is known as forward prediction coding in which information from a previously encoded frame is used for compression calculations to produce what is known as a P frame. A third of the compression modes is known as bi-directional prediction in which information from both past and future encoded frames is used for compression calculations to produce what is known as a B frame. The output of the mode selection module passes to the discrete cosine transform element 14 where the values of the pixels are transformed from the time domain to the frequency domain. The frequency components generated in the element 14 are subject to a variable level of quantisation in the quantisation circuit 15 before being supplied to the output terminal 16.

The compression of the input signal at the terminal 10 to produce the compressed output signal at the terminal 16 is subject to motion compensation to achieve greater compression. The motion compensatied video signals are supplied in known manner by the motion compensation circuit 19 which responds to input signals from the motion estimation element 13 and the inverse discrete cosine transform circuit 18.

The intra mean average difference element 12 calculates the mean average difference between the television frames input to the compression encoder of Figure 1 so as to provide a difference signal to the mode decision circuit 20. The mode decision circuit 20 uses the difference signal from the element 12 and the distortion signals from the element 13 to select the compression mode to which the mode selection module is switched.

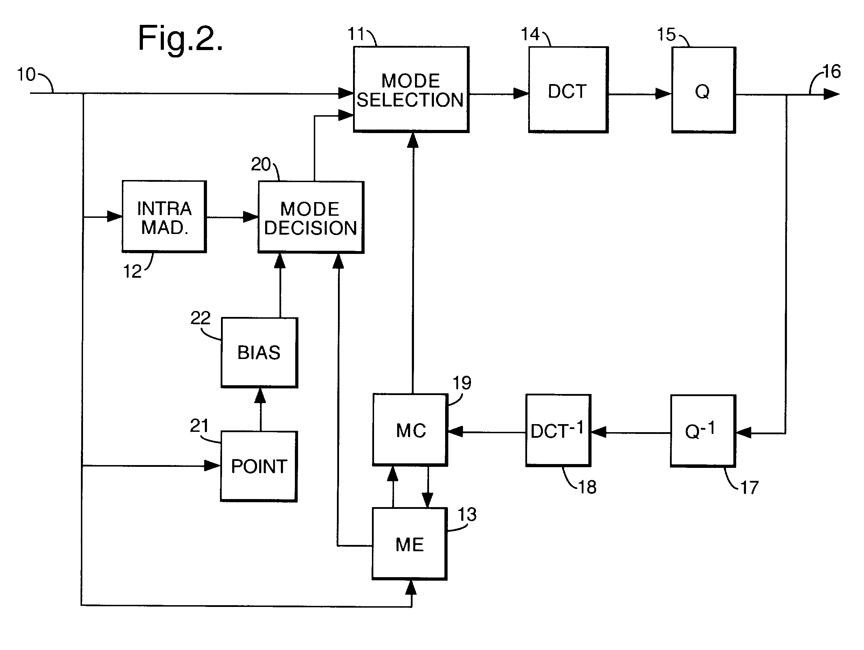

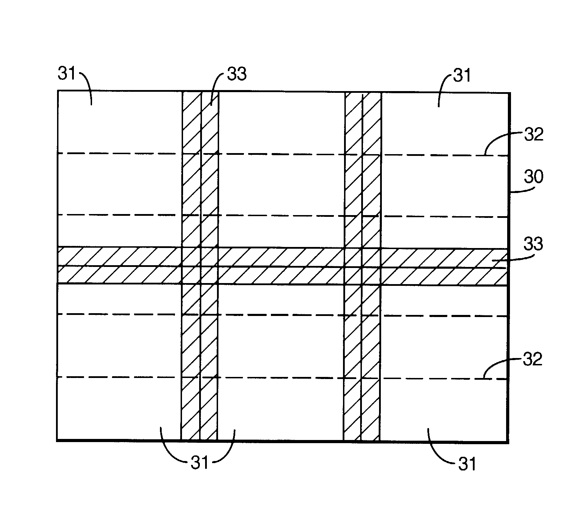

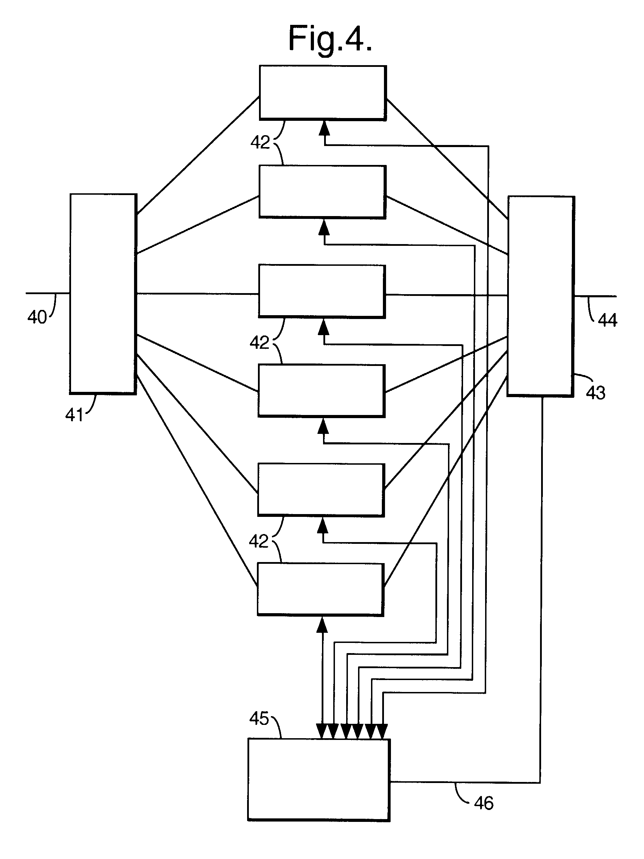

In Figure 2, the compression encoder of Figure 1 is adapted, according to the invention, to include an additional pointer circuit 21 and a bias control circuit 22. The other elements in Figure 2 which are equivalent to corresponding elements in Figure 1 have the same reference numerals as in Figure 1. The compression encoder of Figure 2 is one of a group of such encoders which together co-operate to encode a television signal as will be explained with reference to Figures 3 and 4.

In Figure 3, a television image 30 is split into an array of six adjoining sub-elements or segments 31. The television image 30 is a high definition television (HDTV) image which conforms to an HDTV scanning format. A number of such scanning formats exist and it is to be understood that the present invention is not limited to a particular one of such HDTV formats. The individual segments 31 each comprise a series of data slices indicated generally by the dotted lines within each segment.

In Figure 4, the scanned HDTV image signal is applied to an input terminal 40 of a data stream splitter 41. The splitter 41 is effective to split the HDTV signal into six digital video signals each representing a respective one of the segments 31. The six video signals are supplied by the splitter 41 to six compression encoders 42, each of which is as shown in Figure 2. The six compression encoders 42 operate in parallel and each supplies a compressed data output to a statistical multiplexer 43. A multiplexed output transport stream is supplied by the multiplexer 43 on an output terminal 44. The data from the multiplexer 43 is intended for transmission to a display receiver at which the data will be decompressed and decoded to regenerate the image 30. It will be understood that the data from the multiplexer 43 may be recorded on a record medium before onward transmission to the display receiver.

A quantisation control module 45 is connected to each of the six encoders 42 as shown in Figure 4. In addition, a control connection 46 is made between the quantisation control module 45 and the multiplexer 43.

As will be apparent from the foregoing description, each of the encoders 42 uses quantisation as one of the means of reducing the data rate of the compressed bitstream which passes through the encoder. Depending on the applied level of quantisation, the appearance of the portion of the image 30 represented by the bitstream will change. For low levels of quantisation, an object in the image is faithfully reproduced. As the level of quantisation increases, a filtering effect sets in so as to cause a slight softening of edges within the image. If the quantisation level is increased further still, picture artefacts in the form of distortion patterns around edges may also appear. If there is a difference in the quantisation level applied in different ones of the segments 31 by the different encoders 42, the join between the different segments 31 will be visible in the image ultimately reproduced. The quantisation control module 45 is effective to apply a quantisation control signal to the six encoders 42 which controls the levels of quantisation. The control module 45 uses an indication of the available data rate through the statistical multiplexer 43 so as to generate the quantisation control signal. The available data rate is signalled by the control connection 46.

By equalising the level of quantisation across all the encoders 42, the joins between the different sub-elements 31 of the image 30 are made much less visible.

The equalisation of quantisation across all the segments 31 may not be sufficient to hide the joins between the segments. The reason for this lies in the predictive nature of the motion compensation. If an object moves across one of the segments 31 towards the boundary with another of the segments 31, it may enter a boundary region 33 between the segments. Whilst the object stays outside a boundary region 33, it can be predicted from within the same segment. However, once the object enters the boundary region and starts moving across the join with the next adjoining segment, motion prediction in the boundary area of the segments is not possible. This is because motion compensation requires coding information from both segments in the boundary regions at the join. As a result, there is a discontinuity between the segments 31 which causes the appearance of an object to change as it moves across the boundary from one segment 31 to another.

The pointer circuit 21 is adapted to read the data stream at the input terminal 10 and derive a pointer indication of the position of each macroblock of pixels along a data slice within the segment 31. The pointer indication signals when the blocks are within one of the boundary regions 33. The pointer indication is supplied to the bias circuit 22 which generates a bias signal for the mode decision circuit 20 when the blocks of the input signal are within a boundary region. In the presence of a bias signal from the bias circuit 22, the mode decision circuit will be biased to select intra-frame coding for data blocks within the boundary regions 33. The degree of data compression achieved by intra-frame coding is less than that achieved in forward prediction or bi-directional coding but intra-frame coding within the boundary regions 33 assists in hiding the joins between the segments 31.

A disadvantage of always selecting intra-frame coding for data blocks at the joins between the segments 31 is that intra coded blocks themselves have a different appearance to predicted blocks as far as picture detail and artefacts are concerned. Therefore if an area near the joins is always intra coded it becomes noticeable due to this difference in appearance.

In an alternative embodiment of the invention, the mode decision circuit 20 is adapted to respond to the bias signal from the bias circuit 22 as one of a number of inputs which determine the compression mode within the boundary regions. The other inputs come from the motion estimation element 13 which provides distortion signals to the mode decision circuit 20. A first distortion signal indicates whether the distortion of purely forward predicted blocks exceeds a first set threshold. In the event that the first distortion signal exceeds the first threshold, the mode decision circuit is biased to switch to the intra coding mode. Otherwise, the bias circuit 22 is overridden. A second distortion signal indicates for bi-directional coding whether the distortion values of forward, backward and combined predictions each exceed a second set threshold. In the event that the second distortion signal exceeds the second threshold, the mode decision circuit is biased to switch to the intra coding mode. Otherwise the biasing circuit 22 is overridden.

It will be apparent that the invention provides for compression encoding of the six digital data streams representing the six image segments 31. The data in each data stream is compressed to a variable extent using a variable quantisation level and by selecting the compression mode of each encoder. The control of the extent of compression is effective to reduce or eliminate the appearance of joins in the image when reproduced by a display device.

While six data streams and six image segments have been described above, the invention may be implemented with a different number of data streams and image segments which are processed by an appropriate number of encoders.

## Claims

1. A method of generating encoded digital video signals representing an image, the method comprising the steps of, generating the video signals in the form of individual digital data streams representing respective spatially adjoining sub-elements of the image, compression encoding each of the digital data streams by means of compression algorithms which compress the data to a variable extent, and controlling the extent of compression of the data streams to limit the visibility of joins between the image sub-elements which would appear upon reproduction of the image.

2. A method as claimed in claim 1, wherein the step of compression encoding each of the digital data streams includes compressing the data by means of a quantisation algorithm and the step of controlling the extent of compression of the data comprises selecting the level of quantisation.

3. A method as claimed in claim 1 or 2, wherein the step of compression encoding each of the digital data streams includes compressing the data by intra-frame and predictive coding algorithms and the step of controlling the extent of compression of the data streams comprises selecting between intra-frame and predictive coding algorithms.

4. A method as claimed in claim 3, wherein the step of controlling the extent of compression of the data streams comprises selecting between intra-frame and predictive coding algorithms within boundary regions of the sub-elements of the image.

5. A method as claimed in claim 4, wherein the step of controlling the extent of compression of the data streams comprises selecting between intra-frame and predictive coding algorithms including a motion compensation algorithm.

6. A method according to claim 4 or 5, wherein the step of controlling the extent of compression of the data streams comprises selecting between intra-frame and predictive coding algorithms according to the level of distortion of data within the said boundary regions.

7. Apparatus for generating encoded digital video signals representing an image, the apparatus comprising, a data stream generator for generating the video signals in the form of individual digital data streams representing respective spatially adjoining sub-elements of the image, compression encoding apparatus for compression encoding each of the digital data streams by means of compression algorithms which compress the data to a variable extent, and control apparatus for controlling the extent of compression of the data streams to limit the visibility of joins between the image sub-elements which would appear upon reproduction of the image.

8. Apparatus as claimed in claim 7, wherein the compression encoding apparatus includes quantisation apparatus for compressing each of the digital data streams by means of a quantisation algorithm and the control apparatus is effective to control the extent of compression of the data by selecting the level of quantisation.

9. Apparatus as claimed in claim 7 or 8, wherein the compression encoding apparatus is operable to encode each of the digital data streams by means of intra-frame and predictive coding algorithms and the control apparatus is effective to control the extent of compression of the data by selecting between intra-frame and predictive coding algorithms.

10. Apparatus as claimed in claim 9, wherein the control apparatus is effective to control the extent of compression of the data by selecting between intra-frame and predictive coding algorithms within boundary regions of the sub-elements of the image.

11. Apparatus as claimed in claim 10, wherein the control apparatus is effective to control the extent of compression of the data by selecting between intra frame and predictive coding algorithms including a motion compensation algorithm.

12. Apparatus as claimed in claim 10 or 11, wherein the control apparatus is effective to control the extent of compression of the data by selecting between intra-frame and predictive coding algorithms according to the level of distortion of data within the said boundary regions.
